(19) Europäisches Patentamt
European Patent Office
Office européen des brevets

(11) **EP 2 541 209 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **12175195.2**

(22) Anmeldetag: **17.04.2008**

(51) Int Cl.:
*G01C 21/36* (2006.01)     *B60K 35/00* (2006.01)
*B60K 37/02* (2006.01)     *G09B 29/10* (2006.01)

(54) **Verfahren zum Anzeigen einer digitalen Karte in einem Fahrzeug und Anzeigeeinrichtung hierfür**

Method for displaying a digital map in a vehicle and corresponding display unit.

Procédé d'affichage d'une carte digitale dans un véhicule et unité d'affichage correspondante.

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.04.2007 DE 102007018073**

(43) Veröffentlichungstag der Anmeldung:
**02.01.2013 Patentblatt 2013/01**

(62) Dokumentnummer(n) der früheren Anmeldung(en) nach Art. 76 EPÜ:
**08736341.2 / 2 140 230**

(73) Patentinhaber: **Volkswagen Aktiengesellschaft**
**38440 Wolfsburg (DE)**

(72) Erfinder:
• **Lux, Stefan**
  **38257 Meine (DE)**
• **Dehmann, Rainer**
  **10961 Berlin (DE)**
• **Goss, Stefan**
  **31137 Hildesheim (DE)**
• **Kuhn, Mathias**
  **14129 Berlin (DE)**

(74) Vertreter: **Reitstötter Kinzebach**
**Patentanwälte**
**Sternwartstrasse 4**
**81679 München (DE)**

(56) Entgegenhaltungen:
**EP-A1- 1 519 155      EP-A2- 1 582 393**
**US-A1- 2006 232 589**

**Beschreibung**

Die vorliegende Erfindung betrifft ein Verfahren zum Anzeigen einer digitalen Karte in einem Fahrzeug mittels einer Anzeigeeinrichtung, deren Anzeigebereich für die Darstellung der Karte hinsichtlich der Größe veränderbar ist. Ferner betrifft die Erfindung eine Anzeigeeinrichtung für ein Fahrzeug zum Anzeigen einer digitalen Karte mit einer Steuereinrichtung, mittels derer der Anzeigebereich für die Darstellung der Karte hinsichtlich der Größe veränderbar ist und mittels derer Anzeigedaten für verschiedene Maßstäbe zur Darstellung der digitalen Karte erzeugbar sind.

Die Anzahl von Informationen, die einem Fahrzeugführer aufgrund der steigenden Anzahl von Komforteinrichtungen angezeigt werden steigt ständig. Zu den Komforteinrichtungen, die in modernen Fahrzeugen eingesetzt werden zählen Navigationseinrichtungen, Telekommunikationseinrichtungen, Fahrerassistenzsystemen und Warnhinweise zu eine Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedien- und Anzeigeeinrichtungen in der Mittelkonsole angeordnet. Des Weiteren weisen solche Fahrzeuge ein so genanntes Kombiinstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombiinstrumente neben herkömmlichen Rundinstrumenten auch frei programmierbare Displays auf, welche Informationen einer Navigationseinrichtung, einer Telekommunikationseinrichtung und insbesondere der Fahrerassistenzsysteme darstellen. Die Darstellung umfassender Informationen im Kombiinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombiinstrument dargestellt werden, ergibt sich allerdings das Problem, dass der Fahrzeugführer die gewünschte Information nicht mehr schnell und intuitiv erfassen kann und von der Informationsfülle auf dem Display des Kombiinstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombiinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann. Gleichzeitig sollten solche Informationen angezeigt werden, die für den Fahrzeugführer in der jeweiligen Fahrsituation besonders relevant sind.

Bei der Darstellung digitaler Karten in einem Fahrzeug ergibt sich ferner das Problem, dass die Berechnung von Bilddaten für Maßstabsänderungen sehr rechenintensiv ist. Da die in Steuergeräten des Fahrzeugs verwendeten Prozessoren zumeist eine Rechenleistung besitzen, die nicht mit derjenigen von Computern, die außerhalb des Fahrzeugs verwendet werden, vergleichbar ist, kostet die Berechnung der Bilddaten für einen neuen Maßstab häufig relativ viel Zeit. Außerdem bindet die Berechnung Resourcen, welche für andere Aufgaben genutzt werden könnten. Der Einbau von Prozessoren mit höherer Rechenleistung führt zu höheren Kosten der Steuereinrichtung und damit des Fahrzeugs.

Die EP 1 582 393 A2 beschreibt ein Fahrerinformationssystem und ein Verfahren zum Anzeigen einer digitalen Karte in einem Fahrzeug nach dem Oberbegriff des Anspruchs 1.

Die EP 1 519 155 A1 beschreibt ein Verfahren zum Anzeigen einer digitalen Karte in einem Fahrzeug, bei dem der Anzeigebereich für die Darstellung der Karte hinsichtlich der Größe durch die Ein- und Ausblenden eines Informationsbalkens veränderbar ist.

Die US 2006/0232589 A1 beschreibt schließlich eine Animation für die Darstellung eines Objektes.

Es ist die Aufgabe der vorliegenden Erfindung, ein Verfahren und eine Anzeigeeinrichtung der eingangs genannten Art bereitzustellen, mit denen Rechenkapazität bei der Berechnung der Graphikdaten für die Darstellung einer digitalen Karte bei der Veränderung der Größe eines Anzeigebereichs eingespart werden kann.

Diese Aufgabe wird erfindungsgemäß durch ein Verfahren mit den Merkmalen des Anspruchs 1 und einer Anzeigeeinrichtung mit den Merkmalen des Anspruchs 5 gelöst. Vorteilhafte Aus- und Weiterbildungen ergeben sich aus den Unteransprüchen.

Bei dem erfindungsgemäßen Verfahren bleibt beim Verändern der Größe des Anzeigebereichs für die Darstellung der Karte der dargestellte Maßstab der digitalen Karte unverändert. Üblicherweise wird bei einem Vergrößern des Anzeigebereichs der dargestellte Kartenausschnitt unverändert gelassen und der Maßstab vergrößert, d. h. in die digitale Karte hineingezoomt. Umgekehrt wird üblicherweise bei der Verkleinerung des Anzeigebereichs für die digitale Karte der Kartenmaßstab verkleinert, d. h. aus der Karte herausgezoomt. Die Berechnung der Graphikdaten für die Darstellung der digitalen Karte erfordert in diesen Fällen eine relativ hohe Rechenkapazität. Da bei dem erfindungsgemäßen Verfahren der Maßstab der digitalen Karte unverändert bleibt, obwohl die Größe des Anzeigebereichs verändert wird, ist die für die Berechnung der Graphikdaten nötige Rechenkapazität sehr viel niedriger. Bei einer Vergrößerung des Anzeigebereichs müssen nur die Graphikdaten für den Kartenausschnitt hinzugefügt werden, der vorher nicht dargestellt wurde.

Bei dem erfindungsgemäßen Verfahren wird ein auf dem Display oder auf einem Teilbereich des Displays dargestelltes Anzeigebild durch Veränderung eines Bildparameters verändert, der wie folgt berechnet wird:

$$P_{n+1} = P_n + (P_m - P_n) \cdot F$$

Bei obiger Formel ist n eine natürliche Zahl, $P_0$ der Wert des Bildparameters der dargestellten Information im Ausgangszustand, $P_m$ eine Konstante und F ein Transformationsparameter.

Mit dem erfindungsgemäßen Verfahren kann eine Veränderung des Anzeigebildes erzeugt werden, welche sich an vielfältige Anzeigeinhalte anpassen lässt und bei welcher der Betrachter die Veränderung leicht nachvollziehen kann, so dass ihm die Orientierung im neuen Anzeigebild erleichtert wird. Auf diese Weise kann er die im neuen Anzeigebild dargestellte Information schnell und intuitiv erfassen.

Bei dem erfindungsgemäßen Verfahren verändert sich das Anzeigebild von einem Ausgangszustand zu einem Endzustand, wobei Zwischenbilder angezeigt werden. In diesem Fall läuft der Index n von 0 bis m, $P_0$ ist der Wert des Bildparameters der dargestellten Information im Ausgangszustand und $P_m$ der Wert des Bildparameters der dargestellten Information im Endzustand. Für den Transformationsparameter F gilt: 1 < F < 2. Für den Transformationsparameter F gilt somit insbesondere, dass er ungleich 1 ist.

Mittels des Transformationsparameters F kann festgelegt werden, wie schnell sich das Anzeigebild vom Ausgangszustand in bestimmten Bereichen dem Endzustand annähert.

Für Werte des Transformationsparameters, die zwischen 1 und 2 liegen, ergibt sich eine oszillierende Annäherung an den Endzustand mit abschließender Verzögerung. Bei derartigen oszillierenden Annäherungen hat sich bei der Darstellung von Informationen in einem Fahrzeug als vorteilhaft herausgestellt, wenn der Transformationsparameter zwischen 1,25 und 1,35 liegt, wobei der Wert 1,3 bevorzugt ist, oder zwischen 1,45 und 1,55 liegt, wobei in diesem Fall 1,5 bevorzugt ist.

Gemäß einer Weiterbildung des erfindungsgemäßen Verfahrens ändert sich der Transformationsparameter zeitlich, es gilt somit F = F (n), wenn n den Index für zeitlich aufeinanderfolgende Zwischenbilder angibt.

Bei der Auswahl des Transformationsparameters sind die Besonderheiten bei der Anzeige von Informationen im Fahrzeug zu berücksichtigen. Es hat sich herausgestellt, dass herkömmliche Veränderungen des Anzeigebildes, wie sie bei konventionellen Graphiken verwendet werden, bei einer Verwendung im Fahrzeug nachteilhaft sind, da sie entweder eine zu große Aufmerksamkeit des Betrachters erfordern oder eine Orientierung erschweren, wenn der Betrachter beim Übergang den Blick zwischenzeitlich abwendet. Es hat sich herausgestellt, dass die vorstehend angegebene Berechnungsformel für den Bildparameter und die angegebenen Wertebereiche und Werte des Transformationsparameters für eine Anwendung in einem Fahrzeug, insbesondere einem Kraftfahrzeug, besonders bevorzugt sind.

Der Bildparameter kann das Anzeigebild auf vielfältige Weise charakterisieren und verändern. Der Bildparameter stellt erfindungsgemäß zumindest die Position einer in einem Teilbereich des Anzeigebildes dargestellten Information dar. Ist in diesem Fall der Transformationsparameter zwischen 1 und 2, wandert die dargestellte Information von einem ersten Teilbereich des Anzeigebildes zu einem zweiten Teilbereich des Anzeigebildes, wobei beim Übergang vom Ausgangszustand zum Endzustand Zwischenbilder angezeigt werden. Die Veränderung zwischen zwei aufeinanderfolgenden Zwischenbildern wird von dem Transformationsparameter bestimmt. Der Transformationsparameter bestimmt in diesem Fall somit wie schnell in bestimmten Zeitintervallen sich der erste Teilbereich geometrisch dem zweiten Teilbereich annähert.

Wenn beispielsweise die Anzeige der digitalen Karte vergrößert wird, können Anzeigeinhalte die neben der Karte dargestellt sind, nach außen wandern.

Unter einer Positionsveränderung wird im Sinne der Erfindung sowohl eine Translation als auch eine Rotation sowie Kombinationen dieser beiden Operationen für eine im Anzeigebild dargestellte Information verstanden.

Gemäß einer anderen Ausgestaltung des erfindungsgemäßen Verfahrens betrifft der Bildparameter zusätzlich die Helligkeit einer auf dem Display dargestellten Information. Wenn der Transformationsparameter zwischen 1 und 2 ist, geht die Helligkeit der dargestellten Information somit von einer Ausgangshelligkeit in eine Endhelligkeit über, wobei beim Übergang von der Ausgangshelligkeit in die Endhelligkeit Zwischenhelligkeiten angezeigt werden.

Gemäß einer weiteren Ausgestaltung des erfindungsgemäßen Verfahrens betrifft der Bildparameter zusätzlich die Farbe einer auf dem Display dargestellten Information. Für einen Transformationsparameter zwischen 1 und 2 geht in diesem Fall die Farbe der dargestellten Informationen von einer Ausgangsfarbe in eine Endfarbe über, wobei beim Übergang Zwischenfarben angezeigt werden. Der Begriff "Farbe" umfasst in diesem Fall sowohl den Farbton als auch die Farbsättigung.

Gemäß einer weiteren Ausgestaltung des erfindungsgemäßen Verfahrens betrifft der Bildparameter zusätzlich die Skalierung einer auf dem Display dargestellten Information. Für Transformationsparameter zwischen 1 und 2 kann somit die dargestellte Information vergrößert oder verkleinert werden.

Gemäß einer weiteren Ausgestaltung des erfindungsgemäßen Verfahrens betrifft der Bildparameter zusätzlich die Transparenz einer auf dem Display dargestellten Information. Für Transformationsparameter zwischen 1 und 2 kann somit eine einem anderen Bild überlagerte Information stärker sichtbar oder weniger sichtbar gemacht werden.

Durch die Veränderung des Bildparameters kann insbesondere der Wechsel von dem ersten Anzeigemodus in den zweiten Anzeigemodus und umgekehrt gesteuert werden. Der Bildparameter kann steuern, wie sich Anzeigbereiche hinsichtlich ihrer Position, Skalierung, Farbe und/oder Transparenz verändern.

Bei der erfindungsgemäßen Anzeigeinrichtung sind beim Verändern der Größe des Anzeigebereichs für die Darstellung der Karte mit der Steuereinrichtung Graphikdaten erzeugbar, welche einen veränderten Ausschnitt der digitalen Karte bei unverändertem Maßstab enthalten. Vorteilhaft an der erfindungsgemäßen Anzeigeinrichtung ist, dass die von der Steuereinrichtung erforderliche Rechenkapazität beim Erzeugen der Graphikdaten für die Darstellung der Karte bei einer veränderten Größe des Anzeigebereichs relativ gering ist.

Gemäß einer Ausgestaltung der erfindungsgemäßen Anzeigeinrichtung umfasst diese ein Display und zumindest ein Rundinstrument, das im Bereich des Displays einem Betrachter anzeigbar ist. Mit der Steuereinrichtung ist die Anzeigeeinrichtung in diesem Fall so ansteuerbar, dass sie einen ersten Anzeigemodus aufweist, bei dem zumindest ein Rundinstrument dem Betrachter angezeigt wird, und die digitale Karte in einem Anzeigebereich des Displays außerhalb des Rundinstruments angezeigt wird und einen zweiten Anzeigemodus aufweist, bei dem das zumindest eine Rundinstrument dem Betrachter nicht angezeigt wird und ein größerer Ausschnitt der digitalen Karte in einem vergrößerten Anzeigebereich des Displays angezeigt wird, ohne dass beim Übergang zu dem vergrößerten Anzeigebereich der Maßstab der digitalen Karte verändert wird.

Mit der Steuereinrichtung ist die Anzeigeeinrichtung beispielsweise so ansteuerbar, dass in dem ersten Anzeigemodus der Anzeigeeinrichtung die digitale Karte von der Darstellung des Rundinstruments verdeckt wird.

Bevorzugt ist ferner ein mit der Steuereinrichtung gekoppeltes Bedienelement vorgesehen, durch welches von dem ersten Anzeigemodus in den zweiten Anzeigemodus und umgekehrt wechselbar ist.

Gemäß einer bevorzugten Weiterbildung der erfindungsgemäßen Anzeigeinrichtung sind im ersten Anzeigemodus zumindest zwei Rundinstrumente dem Betrachter anzeigbar. Das Display weist in diesem Fall jeweils einen Anzeigebereich innerhalb der Rundinstrumente und einen Anzeigebereich zwischen den beiden Rundinstrumenten auf, in dem die die Karte anzeigbar ist. In diesem Fall werden im zweiten Betriebszustand die zwei Rundinstrumente dem Betrachter nicht angezeigt und das Display umfasst im zweiten Betriebszustand einen größeren Anzeigebereich für die Karte, die im ersten Anzeigemodus zwischen den beiden Rundinstrumenten vom Display angezeigt wird.

Gemäß einer bevorzugten Weiterbildung der erfindungsgemäßen Anzeigeinrichtung ist zumindest ein Rundinstrument eine beleuchtete und/oder selbstleuchtende elektromechanische Anzeigeeinheit. Das diese Anzeigeeinheit abbildende Licht ist in diesem Fall mittels einer Kombinationseinrichtung für den Betrachter im Bereich des Displays darstellbar. Des Weiteren ist bevorzugt eine Blende vorgesehen, die so ausgebildet ist, dass die zumindest eine elektromechanische Anzeigeeinheit bzw. das von dieser gebildete Rundinstrument für den Betrachter im Bereich des Displays zumindest zum Teil nicht mehr sichtbar ist.

Vorteilhaft an der Verwendung einer elektromechanischen Anzeigeeinheit, welche mittels der Kombinationseinrichtung für den Betrachter im Bereich des Displays darstellbar ist, ist, dass das Anzeigebild der elektromechanischen Anzeigeeinrichtung virtuell in einem Abstand vor dem Display projiziert wird, so dass virtuell zumindest teilweise ein dreidimensionales Bild erzeugt wird. Auf diese Weise wird in dem ersten Anzeigemodus die von dem Rundinstrument dargestellte Information für den Betrachter von dem Display abgesetzt, so dass der Betrachter den Informationsgehalt des Rundinstruments auch dann schnell und intuitiv erfassen kann, wenn auf dem Display komplexe Informationen angezeigt werden.

Gemäß einer bevorzugten Ausgestaltung der erfindungsgemäßen Anzeigeinrichtung kann mit der Steuereinrichtung die Anzeigeeinrichtung so ansteuerbar sein, dass sich bei einer Veränderung des Anzeigebildes der Bildparameter wie vorstehend erläutert verändert.

Gemäß einer weiteren Ausgestaltung der erfindungsgemäßen Anzeigeinrichtung ist das zumindest eine Rundinstrument von dem Display anzeigbar.

Die Erfindung wird nun anhand eines Ausführungsbeispiels mit Bezug zu den Zeichnungen erläutert:

| | |
|---|---|
| Figur 1 | zeigt schematisch die Anordnung eines Ausführungsbeispiels der erfindungsgemäßen Anzeigeeinrichtung in einem Fahrzeug, |
| Figur 2 | zeigt den Aufbau eines Ausführungsbeispiels der erfindungsgemäßen Anzeigeeinrichtung, |
| Figur 3 | zeigt die Anordnung des Displays, des Rundinstruments und der Kombinationseinrichtung eines Ausführungsbeispiels der erfindungsgemäßen Anzeigeeinrichtung und |
| die Figuren 4A und 4B | zeigen Beispiele der Anzeige gemäß einem Ausführungsbeispiel der Erfindung für einen ersten Anzeigemodus und einen zweiten Anzeigemodus. |

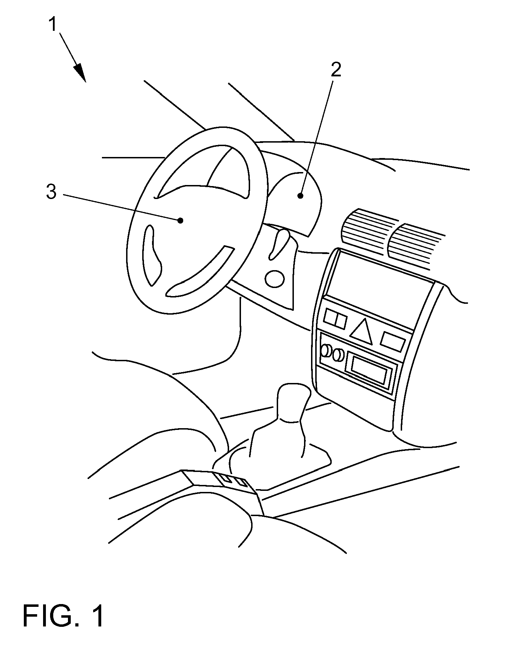

Figur 1 zeigt ein Beispiel einer Innenansicht eines Kraftfahrzeugs 1. In dem Kraftfahrzeug 1 ist hinter einem Lenkrad 3 eine als Kombünstrument ausgebildete Anzeigeeinrichtung 2 angeordnet, deren Anzeige im Blickfeld bzw. in der Nähe des Blickfeldes des Fahrers liegt.

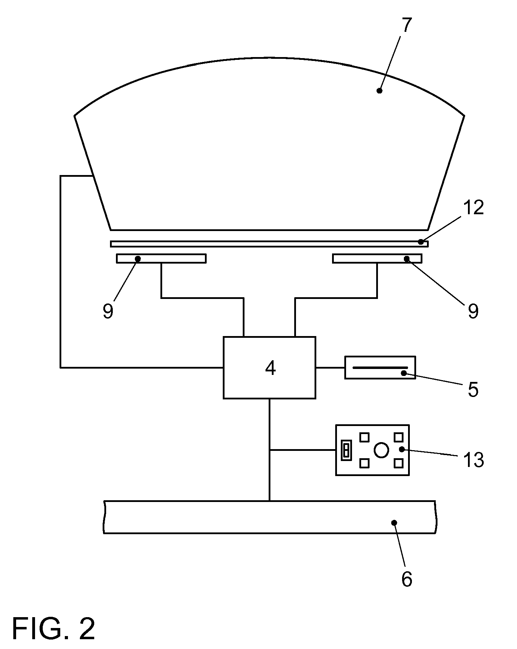

In Figur 2 ist der prinzipielle Aufbau der Anzeigeeinrichtung 2 dargestellt. Die Anzeigeeinrichtung 2 umfasst eine Steuereinrichtung 4, die datentechnisch mit einem Fahrzeugbus 6 verbunden ist. Auf diese Weise können der Steuereinrichtung 4 Daten übertragen werden, aus denen die Steuereinrichtung Graphikdaten für die Anzeige der Anzeigeeinrichtung 2 generieren kann. Ferner kann die Steuereinrichtung 4 auch über andere Schnittstellen Daten empfangen. Beispielsweise kann die Steuereinrichtung 4 direkt mit Sensoren und Steuergeräten des Fahrzeugs oder anderen Einrichtungen zur Erzeugung von Graphikdaten gekoppelt sein.

Des Weiteren ist die Steuereinrichtung 4 mit einem Datenspeicher 5 verbunden, aus dem für die Erzeugung der Graphikdaten erforderliche Daten ausgelesen werden können. Der Datenspeicher 5 kann beispielsweise eine oder mehrere digitale Straßenkarten enthalten. Ferner können in dem Datenspeicher 5 Voreinstellungen, Parameter und Stellwerte gespeichert sein.

Des Weiteren ist die Steuereinrichtung 4 mit einer Bedieneinheit 13 verbunden, welche ein Bedienelement oder mehrere Bedienelemente umfasst. Mittels der Bedieneinheit 13 kann ein Nutzer die Anzeigen und Darstellungen der Anzeigeeinrichtung 2 steuern.

Die Steuereinrichtung ist ferner mit einem frei programmierbaren Display 7 verbunden, welches verschiedene Anzeigebereiche aufweist. Ferner ist die Steuereinrichtung 4 mit zwei elektromechanischen Rundinstrumenten 9 verbunden.

Bei dem Display 7 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 7 ist eine (nicht gezeigte) Hintergrundbeleuchtung zugeordnet, die durch eine oder mehrere lichtemittierende Dioden bereitgestellt werden kann. Die Steuereinrichtung 4 steuert ferner auf an sich bekannte Weise zwei Rundinstrumente 9, welche z. B. für die Anzeige der Geschwindigkeit und Motordrehzahl vorgesehen sind. Die Rundinstrumente 9 umfassen eine Skala und einen Zeiger, dessen Drehwinkel von einem Steuersignal der Steuereinrichtung 4 bestimmt wird. Für die Rundinstrumente 9 ist jeweils separat eine Beleuchtung vorgesehen, die von dem Steuergerät ein- und ausgeschaltet werden kann. Das die Rundinstrumente 9 abbildende Licht kann vollständig oder teilweise mittels der Kombinationseinrichtung 10 für den Betrachter im Bereich des Displays 7 dargestellt werden. Auf diese Weise können die Rundinstrumente 9 mittels eines Steuersignals der Steuereinrichtung 4 im Bereich des Displays 7 dargestellt oder nicht dargestellt werden.

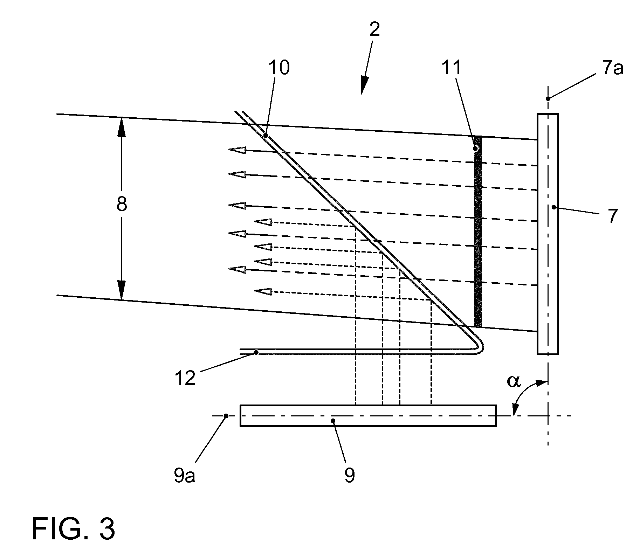

Im Folgenden wird mit Bezug zu Figur 3 die Anordnung des Displays 7, der Rundinstrumente 9 und der Kombinationseinrichtung 10 im Detail erläutert:

Das Display 7 der Anzeigeeinrichtung 2 ist so angeordnet, dass es im unmittelbaren Blickfeld 8 des Fahrers angeordnet ist, wie es in Figur 1 gezeigt ist. Die Rundinstrumente 9 sind in dem in Figur 3 gezeigten Ausführungsbeispiel horizontal unterhalb des Blickfelds 8 des Fahrers angeordnet, so dass sich die von den Rundinstrumenten 9 gebildete Ebene in Blickrichtung 8 des Fahrers auf das Display 7 liegt. Die Rundinstrumente 9 können insbesondere unterhalb des Blickfeldes 8 angeordnet sein. Die Rundinstrumente 9 sind wie in einem herkömmlichen Kombünstrument aufgebaut und angeordnet. Die Skalen der Rundinstrumente 9 sind selbstleuchtend oder beleuchtet ausgeführt. Sie umfassen einen beleuchteten oder einen selbstleuchtenden drehbaren Zeiger zur Kenntlichmachung des aktuellen Wertes, der angezeigt werden soll.

Die Mittelachsen 7a und 9a des Displays 7 und der Rundinstrumente 9 sind vorteilhafterweise in einem Winkel $\alpha$ von 90° zueinander angeordnet. In einem Winkel von 45° von dem Rundinstrument 9 ist die Kombinationseinrichtung 10 vorgesehen.

Im in Figur 3 gezeigten Ausführungsbeispiel ist die Kombinationseinrichtung 10 ein planarer semitransparenter Spiegel, der für das abbildende Licht des Displays 7 durchlässig ausgebildet ist, so dass ein Betrachter die Anzeige des Displays direkt wahrnimmt. Das abbildende Licht der Rundinstrumente 9 wird von dem semitransparenten Spiegel 10 reflektiert, so dass es für den Betrachter in der Anzeige des Displays 7 als virtuelles Bild 11 vorgelagert erscheint. Zwischen der Kombinationseinrichtung 10 und dem Rundinstrument 9 ist eine Blende 12 aus semitransparentem Material vorgesehen, die für das abbildende Licht der Rundinstrumente 9 durchlässig ausgebildet ist und welche die Rundinstrumente 9 für den Betrachter zumindest im ausgeschalteten Zustand abdeckt. Die Steuereinrichtung 4 kann somit die Rundinstrumente 9 jeweils ein- und ausschalten, so dass sie für den Betrachter vor dem Display 7 dargestellt werden oder nicht dargestellt werden

Im eingeschalteten Zustand der Rundinstrumente 9, d. h. wenn diese leuchten oder beleuchtet werden, erscheint für den Betrachter ein virtuelles Bild 11 der Rundinstrumente 9 vor dem Display 7. Wenn die Rundinstrumente 9 ausgeschaltet sind verschwindet das virtuelle Bild 11 und die Rundinstrumente 9 sind für den Betrachter nicht sichtbar. Die Rundinstrumente 9 können selbstverständlich von der Steuereinrichtung 4 separat ein- und ausgeschaltet werden. Ferner kann die Blende 12 so ausgebildet sein, dass nur bestimmte Bereiche der Rundinstrumente 9 bzw. der zugehörigen Zeiger im virtuellen Bild 11 erscheinen. Im vorliegenden Ausführungsbeispiel jeweils ist nur ein radial äußerer Abschnitt der Zeiger im virtuellen Bild 11 sichtbar.

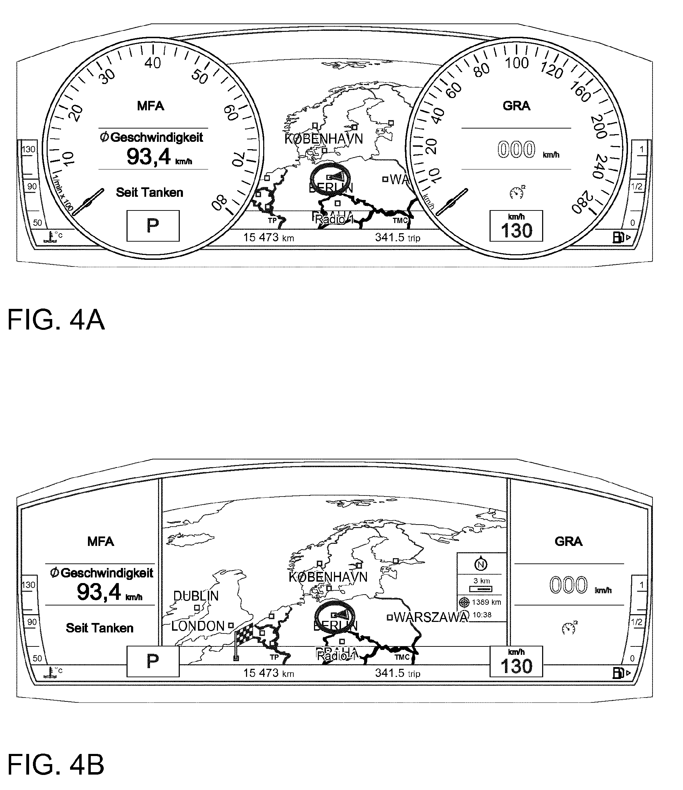

Mit Bezug zu den Figuren 4A und 4B wird die Anzeige des Displays 7 und die Darstellung der Rundinstrumente 9 für verschiedene Anzeigemodi erläutert, wie sie bei dem Ausführungsbeispiel der erfindungsgemäßen Anzeigeeinrichtung und des erfindungsgemäßen Verfahrens einem Betrachter erscheinen:

Figur 4A zeigt die Ansicht auf die Anzeige der Anzeigeeinrichtung 2, wenn sich die Anzeigeeinrichtung 2 in dem ersten Anzeigemodus befindet. Die Steuereinrichtung 4 steuert die Rundinstrumente 9 so an, dass sie als virtuelles Bild beabstandet vor dem Display sichtbar sind. Das virtuelle Bild der Rundinstrumente 9 zeigt einen leuchtenden Ring in dem nach innen radial leuchtende Skalenstriche angeordnet sind. Ferner ist ein leuchtender Zeiger angezeigt. Der Zeiger erstreckt sich radial in Richtung der Skalenstriche.

Es ist jedoch nur der radial äußere Abschnitt des Zeigers erkennbar, so dass innerhalb der Rundinstrumente ein frei verfügbarer Anzeigebereich des Displays 7 verbleibt. Das linke Rundinstrument 9 zeigt auf an sich bekannte Weise die Motordrehzahl des Fahrzeugs und das rechte Rundinstrument 9 die Geschwindigkeit des Fahrzeugs an.

Das Display 7 wird von der Steuereinrichtung 4 so angesteuert, dass verschiedene Anzeigebereiche gebildet werden. Innerhalb des Rundinstruments 9 für die Motordrehzahl ist auf dem Display 7 ein Anzeigebereich für eine Multifunktionsanzeige (MFA) gebildet. Innerhalb des rechten Rundinstruments 9 für die Geschwindigkeit ist in dem Display 7 ein Anzeigebereich für Fahrerassistenzsysteme vorgesehen. Zwischen den beiden Rundinstrumenten verbleibt ein Bereich, in dem variabel eine Vielzahl von Informationen, die in irgendeiner Weise den Betrieb des Fahrzeugs betreffen, angezeigt werden können. In diesem mittleren Anzeigebereich zwischen den beiden Rundinstrumenten 9 wird eine digitale Karte in einem bestimmten Maßstab angezeigt. Der Kartenausschnitt wird oben von der Begrenzung des Displays 7 begrenzt, unten von den Statuszeilen des mittleren Anzeigebereichs, wobei es wie in Figur 4A gezeigt möglich ist, dass die Statuszeilen transparent ausgebildet sind, so dass der Betrachter die digitale Karte zum Teil noch erkennen kann. Seitlich wird die digitale Karte von den beiden Rundinstrumenten begrenzt, welche die Karte abdecken. Anders als in Figur 4A gezeigt, wäre es auch möglich, dass auch Teile des Anzeigebereichs innerhalb der Rundinstrumente die digitale Karte darstellen, so dass sie durch die Rundinstrumente durch sichtbar ist.

Figur 4B zeigt die Anzeige des Displays 7 in dem zweiten Anzeigemodus. Es ist erkennbar, dass die Rundinstrumente 9 nicht mehr dargestellt werden. Zum Beispiel hat die Steuereinrichtung 4 die Beleuchtung der Rundinstrumente 9 ausgeschaltet, so dass das virtuelle Bild 11 der Rundinstrumente für den Betrachter nicht mehr sichtbar ist. Die Anzeigeinhalte der Anzeigebereiche, die im ersten Anzeigemodus innerhalb der Rundinstrumente dargestellt wurden, wandern nach außen und werden ggfs. auch verkleinert dargestellt. Somit ergibt sich im Mittelbereich des Displays 7 ein relativ großer Anzeigebereich für die Darstellung der digitalen Karte. Erfindungsgemäß wird jedoch beim Übergang vom ersten Anzeigemodus in den zweiten Anzeigemodus der Maßstab der dargestellten digitalen Karte nicht verändert. Es wird nur beim Übergang vom ersten Anzeigemodus in den zweiten Anzeigemodus ein größerer Kartenausschnitt angezeigt. Umgekehrt wird beim Übergang vom zweiten Anzeigemodus in den ersten Anzeigemodus ein kleinerer Kartenausschnitt angezeigt, ohne dass der Maßstab der Karte verändert wird.

Die Anzeigeeinrichtung 2 lässt sich über die Bedieneinheit 13 steuern. Die Bedieneinheit 13 umfasst insbesondere ein Bedienelement, mit welchem zwischen dem ersten Anzeigemodus und dem zweiten Anzeigemodus gewechselt werden kann. Ferner ist es auch möglich, dass zwischen den Anzeigemodi automatisch mittels der Steuereinrichtung 4 gewechselt wird, wenn der dargestellte Informationsgehalt auf dem Display 7 dies erforderlich macht. Die Steuereinrichtung 4 kann in diesem Falle in Abhängigkeit von den in Speicher 5 gespeicherten Daten den Anzeigemodus automatisch wechseln.

Im Folgenden wird die Anzeige auf dem Display 7 bei einem Wechsel von dem ersten Anzeigemodus in den zweiten Anzeigemodus und umgekehrt erläutert. Dabei wird beispielhaft die Veränderung des geometrischen Ortes und der Skalierung einer Graphik beim Wechsel zwischen den Anzeigemodi beschrieben. Es können auf gleiche Weise jedoch auch andere Veränderungen des Anzeigebildes verwirklicht werden. Beispielsweise kann die Helligkeit, die Farbe oder die Transparenz oder Kombinationen dieser Bildparameter verändert werden.

Ein Bildparameter P charakterisiert bei der folgenden Beschreibung die geometrische Position der Graphik beim Übergang vom Ausgangszustand zum Endzustand sowie die Skalierung. Die Zwischenbilder, die zwischen dem Ausgangszustand und dem Endzustand angezeigt werden, werden hinsichtlich des Bildparameters P wie folgt berechnet:

$$P_{n+1} = P_n + \left(P_m - P_n\right) \cdot F$$

Der Index n läuft in diesem Fall von 0 bis m. Der Wert des Bildparameters $P_0$ charakterisiert den geometrischen Ort und die Skalierung der Graphik im Ausgangszustand. Der Bildparameter $P_m$ charakterisiert die Graphik hinsichtlich ihres Ortes und ihrer Skalierung im Endzustand. Mittels des Transformationsparameters F kann bestimmt werden, ob sich die Geschwindigkeitsanzeige dem Endzustand direkt annähert oder oszillierend annähert. Ferner können die Beschleunigungen bei der Veränderung des Parameters eingestellt werden. Jeder Wert des Bildparameters $P_0$, $P_1$, $P_2$, ... , $P_m$ charakterisiert ein Zwischenbild. Das Zeitintervall zwischen zwei Zwischenbildern wird konstant gewählt. Die Anzeigebilder werden auf dem Display 7 somit mit einer festen Frequenz angezeigt.

Der Transformationsparameter F kann z. B. 1,3 sein, um eine oszillierende Annäherung an den Endzustand zu erreichen. Es ergibt sich in diesem Fall eine relativ schnelle oszillierende Annäherung an den Endzustand. Bereits nach fünf Bildern ist die Abweichung von dem Endzustand kleiner als 1 %. Eine oszillierende Annäherung an den Endzustand ergibt eine Veränderung des Anzeigebildes, welche für den Betrachter sehr natürlich und wenig technisch erscheint. Es entspricht einem Federn, wie es der Betrachter von Vorgängen in seiner natürlichen Umgebung kennt. Hierdurch kann der Betrachter die Veränderung des Anzeigebildes leichter nachvollziehen, wodurch ihm die Orientierung beim Übergang vom Anfangszustand zum Endzustand erleichtert wird.

BEZUGSZEICHENLISTE

| | |
|---|---|
| 1 | Kraftfahrzeug |
| 2 | Anzeigeeinrichtung |
| 3 | Lenkrad |
| 4 | Steuereinrichtung |
| 5 | Datenspeicher |
| 6 | Fahrzeugbus |
| 7 | Display |
| 8 | Blickfeld |
| 9 | Rundinstrument |
| 9a | Mittelachse des Rundinstruments |
| 10 | Kombinationseinrichtung |
| 11 | virtuelles Bild |
| 12 | Blende |
| 13 | Bedieneinheit |

**Patentansprüche**

1.  Verfahren zum Anzeigen einer digitalen Karte in einem Fahrzeug (1) mittels einer Anzeigeeinrichtung (2), deren Anzeigebereich für die Darstellung der Karte hinsichtlich der Größe veränderbar ist, wobei beim Verändern der Größe des Anzeigebereichs für die Darstellung der Karte der dargestellte Maßstab der digitalen Karte unverändert bleibt,
    wobei die Anzeigeeinrichtung (2) ein Display (7) umfasst, **dadurch gekennzeichnet, dass** ein auf dem Display (7) oder auf einem Teilbereich des Displays (7) dargestelltes Anzeigebild durch Veränderung eines Bildparameters verändert wird, der wie folgt berechnet wird:

$$P_{n+1} = P_n + (P_m - P_n) \cdot F$$

    wobei n eine natürliche Zahl ist, welche von 0 bis m läuft und den Index für zeitlich aufeinanderfolgende Zwischenbilder angibt, $P_0$ der Wert des Bildparameters einer in dem Anzeigebild dargestellten Information im Ausgangszustand ist, $P_m$ eine Konstante ist und den Wert des Bildparameters der dargestellten Information im Endzustand darstellt und F ein Transformationsparameter ist, wobei der Transformationsparameter F zwischen 1 und 2 liegt und der Bildparameter zumindest die Position einer in einem Teilbereich des Anzeigebildes neben der Karte dargestellten Information betrifft, so dass die neben der Karte dargestellte Information von einem ersten Teilbereich des Anzeigebildes zu einem zweiten Teilbereich des Anzeigebildes wandert, wodurch der Anzeigebereich für die Darstellung der Karte hinsichtlich der Größe verändert wird.

2.  Verfahren nach Anspruch 1,
    **dadurch gekennzeichnet,**
    **dass** der Bildparameter zusätzlich die Helligkeit einer auf dem Display (7) dargestellten Information betrifft.

3.  Verfahren nach einem der vorstehenden Ansprüche,
    **dadurch gekennzeichnet,**
    **dass** der Bildparameter zusätzlich die Farbe einer auf dem Display (7) dargestellten Information betrifft.

4. Verfahren nach einem der vorstehenden Ansprüche,
**dadurch gekennzeichnet,**
**dass** der Bildparameter zusätzlich die Skalierung einer auf dem Display (7) dargestellten Information betrifft.

5. Anzeigeeinrichtung (2) für ein Fahrzeug (1) zum Anzeigen einer digitalen Karte umfassend:

- ein Display (7); und
- eine Steuereinrichtung (4) mittels derer der Anzeigebereich für die Darstellung der Karte hinsichtlich der Größe veränderbar ist und mittels derer Graphikdaten für verschiedene Maßstäbe zur Darstellung der digitalen Karte erzeugbar sind,
- wobei beim Verändern der Größe des Anzeigebereichs für die Darstellung der Karte mit der Steuereinrichtung (4) Graphikdaten erzeugbar sind, welche einen veränderten Ausschnitt der digitalen Karte bei unverändertem Maßstab enthalten,
**dadurch gekennzeichnet,**
**dass** mit der Steuereinrichtung (4) die Anzeigeeinrichtung so ansteuerbar ist, dass ein auf dem Display (7) oder auf einem Teilbereich des Displays (7) dargestelltes Anzeigebild durch Veränderung eines Bildparameters verändert wird, der wie folgt berechnet wird:

$$P_{n+1} = P_n + (P_m - P_n) \cdot F$$

wobei n eine natürliche Zahl ist, welche von 0 bis m läuft und den Index für zeitlich aufeinanderfolgende Zwischenbilder angibt, $P_0$ der Wert des Bildparameters einer in dem Anzeigebild dargestellten Information im Ausgangszustand ist, $P_m$ eine Konstante ist und den Wert des Bildparameters der dargestellten Information im Endzustand darstellt und F ein Transformationsparameter ist, wobei der Transformationsparameter F zwischen 1 und 2 liegt und der Bildparameter die Position einer in einem Teilbereich des Anzeigebildes neben der Karte dargestellten Information betrifft, so dass die neben der Karte dargestellte Information von einem ersten Teilbereich des Anzeigebildes zu einem zweiten Teilbereich des Anzeigebildes wandert, wodurch der Anzeigebereich für die Darstellung der Karte hinsichtlich der Größe verändert wird.

6. Anzeigeeinrichtung (2) nach Anspruch 5,
**dadurch gekennzeichnet,**

- **dass** die Anzeigeeinrichtung (2) zumindest ein Rundinstrument (9) umfasst, das im Bereich des Displays (7) einem Betrachter anzeigbar ist und
- **dass** mit der Steuereinrichtung (4) die Anzeigeeinrichtung (2) so ansteuerbar ist, dass sie
- einen ersten Anzeigemodus aufweist, bei dem zumindest ein Rundinstrument (9) dem Betrachter angezeigt wird und die digitale Karte in einem Anzeigebereich des Displays (7) außerhalb des Rundinstruments (9) angezeigt wird, und
- einen zweiten Anzeigemodus aufweist, bei dem das zumindest eine Rundinstrument (9) dem Betrachter nicht angezeigt wird und ein größerer Ausschnitt der digitalen Karte in einem vergrößerten Anzeigebereich des Displays (7) angezeigt wird, ohne dass beim Übergang zu dem vergrößerten Anzeigebereich der Maßstab der digitalen Karte verändert wird.

**Claims**

1. Method for displaying a digital map in a vehicle (1) by means of a display unit (2), the display area of which for representing the map is variable with regard to size, the scale of the digital map represented remaining unchanged on changing the size of the display area for representing the map, wherein the display unit (2) comprises a display (7), **characterized in that** a display image represented on the display (7) or on a part-area of the display (7) is changed by changing an image parameter which is calculated as follows:

$$P_{n+1} = P_n + (P_m - P_n) \cdot F$$

wherein n is a natural number which runs from 0 to m and specifies the index for intermediate images following one

another in time, $P_0$ is the value of the image parameter of an information item represented in the display image in the initial state, $P_m$ is a constant and represents the value of the image parameter of the information represented in its final state and F is a transformation parameter, the transformation parameter F being between 1 and 2 and the image parameter relating at least to the position of an information item represented in a part-area of the display image next to the map so that the information item represented next to the map migrates from a first part area of the display image to a second part area of the display image as a result of which the display area for representing the map is changed with regard to its size.

**2.** Method according to Claim 1,
**characterized in that**
the image parameter additionally relates to the brightness of an information item represented on the display (7).

**3.** Method according to one of the preceding claims,
**characterized in that**
the image parameter additionally relates to the colour of an information item represented on the display (7).

**4.** Method according to one of the preceding claims,
**characterized in that**
the image parameter additionally relates to the scaling of an information item represented on the display (7).

**5.** Display unit (2) for a vehicle (1) for displaying a digital map, comprising
a display (7); and
a control device (4) by means of which the display area for representing the map is variable with regard to its size and by means of which graphics data can be generated for various scales for representing the digital map,
wherein, on changing the size of the display area for representing the map, graphics data can be generated by means of the control device (4) which contain a changed section of the digital map with unchanged scale,
**characterized in that**
by means of the control device (4), the display unit can be controlled in such a manner that a display image represented on the display (7) or on a part-area of the display (7) is changed by changing one image parameter which is calculated as follows:

$$P_{n+1} \;=\; P_n + (P_m - P_n) \;\bullet\; F$$

wherein n is a natural number which runs from 0 to m and specifies the index for intermediate images following one another in time, $P_0$ is the value of the image parameter of an information item represented in the display image in the initial state, $P_m$ is a constant and represents the value of the image parameter of the information represented in its final state and F is a transformation parameter, the transformation parameter F being between 1 and 2 and the image parameter relating to the position of an information item represented in a part area of the display image next to the map so that the information item represented next to the map migrates from a first part area of the display image to a second part area of the display image, as a result of which the display area for representing the map is changed with regard to its size.

**6.** Display unit (2) according to Claim 5, **characterized in that**

- the display unit (2) comprises at least one round instrument (9) which can be displayed to an observer in the area of the display (7) and
- that by means of the control device (4), the display unit (2) can be controlled in such a manner that it
- has a first display mode in which at least one round instrument (9) is displayed to the observer and the digital map is displayed in a display area of the display (7) outside the round instrument (9) and has a second display mode in which the at least one round instrument (9) is not displayed to the observer and a larger section of the digital map is displayed in an enlarged display area of the display (7) without the scale of the digital map being changed on transition to the enlarged display area.

**Revendications**

1. Procédé d'affichage d'une carte numérique dans un véhicule (1) au moyen d'un dispositif d'affichage (2), dont la taille de la zone d'affichage destinée à la représentation de la carte est modifiable, l'échelle représentée de la carte numérique restant inchangée en cas de modification de la taille de la zone d'affichage pour la représentation de la carte,
le dispositif d'affichage (2) comprenant un écran (7), **caractérisé en ce qu'**une image d'affichage représentée sur l'écran (7) ou sur une zone partielle de l'écran (7) est modifiée en modifiant un paramètre d'image qui est calculé comme suit :

$$P_{n+1} = P_n + (P_m - P_n) \cdot F$$

où n est un nombre naturel qui prend les valeurs de 0 à m et indique l'indice pour les images intermédiaires chronologiques, $P_0$ est la valeur du paramètre d'image d'une information représentée dans l'image d'affichage à l'état initial, $P_m$ est une constante et représente la valeur du paramètre d'image de l'information représentée à l'état final et F est un paramètre de transformation, le paramètre de transformation F étant compris entre 1 et 2 et le paramètre d'image concernant au moins la positon d'une information représentée dans une zone partielle de l'image d'affichage à côté de la carte, de sorte que l'information représentée à côté de la carte migre d'une première zone partielle de l'image d'affichage vers une deuxième zone partielle de l'image d'affichage, ce qui entraîne une modification de la taille de la zone d'affichage pour la représentation de la carte.

2. Procédé selon la revendication 1, **caractérisé en ce que** le paramètre d'image concerne en plus la luminosité d'une information représentée sur l'écran (7).

3. Procédé selon l'une des revendications précédentes, **caractérisé en ce que** le paramètre d'image concerne en plus la couleur d'une information représentée sur l'écran (7).

4. Procédé selon l'une des revendications précédentes, **caractérisé en ce que** le paramètre d'image concerne en plus la valeur d'échelle d'une information représentée sur l'écran (7).

5. Dispositif d'affichage (2) pour un véhicule (1) destiné à afficher une carte numérique, comprenant :

   - un écran (7) ; et
   - un dispositif de commande (4) au moyen duquel la taille de la zone d'affichage destinée à la représentation de la carte est modifiable et au moyen duquel peuvent être générées des données graphiques pour différentes échelles en vue de la représentation de la carte numérique,
   - des données graphiques pouvant être générées avec le dispositif de commande (4) lors de la modification de la taille de la zone d'affichage destinée à la représentation de la carte, lesquelles contiennent une portion modifiée de la carte numérique avec une échelle inchangée,
   **caractérisé en ce**
   **que** le dispositif d'affichage peut être commandé par le dispositif de commande (4) de telle sorte qu'une image d'affichage représentée sur l'écran (7) ou sur une zone partielle de l'écran (7) est modifiée en modifiant un paramètre d'image qui est calculé comme suit :

$$P_{n+1} = P_n + (P_m - P_n) \cdot F$$

où n est un nombre naturel qui prend les valeurs de 0 à m et indique l'indice pour les images intermédiaires chronologiques, $P_0$ est la valeur du paramètre d'image d'une information représentée dans l'image d'affichage à l'état initial, $P_m$ est une constante et représente la valeur du paramètre d'image de l'information représentée à l'état final et F est un paramètre de transformation, le paramètre de transformation F étant compris entre 1 et 2 et le paramètre d'image concernant la position d'une information représentée dans une zone partielle de l'image d'affichage à côté de la carte, de sorte que l'information représentée à côté de la carte migre d'une première zone partielle de l'image d'affichage vers une deuxième zone partielle de l'image d'affichage, ce qui entraîne une modification de la taille de la zone d'affichage pour la représentation de la carte.

6. Dispositif d'affichage (2) selon la revendication 5, **caractérisé en ce**

- **que** le dispositif d'affichage (2) comprend au moins un instrument rond (9) qui peut être affiché à l'attention d'un observateur dans la zone de l'écran (7) et
- **que** le dispositif d'affichage (2) peut être commandé avec le dispositif de commande (4) de telle sorte
- **qu'**il possède un premier mode d'affichage avec lequel au moins un instrument rond (9) est affiché à l'attention de l'observateur et la carte numérique est affichée dans une zone d'affichage de l'écran (7) à l'extérieur de l'instrument rond (9), et
- **qu'**il possède un deuxième mode d'affichage avec lequel l'au moins un instrument rond (9) n'est pas affiché à l'attention de l'observateur et une portion plus grande de la carte numérique est affichée dans une zone d'affichage agrandie de l'écran (7) sans que l'échelle de la carte numérique soit modifiée lors de la transition vers la zone d'affichage plus grande.

FIG. 1

FIG. 2

FIG. 3

FIG. 4A

FIG. 4B

EP 2 541 209 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1582393 A2
- EP 1519155 A1

- US 20060232589 A1